# EUROPEAN PATENT SPECIFICATION

(11) **EP 4 253 112 B1**
(45) Date of publication and mention of the grant of the patent: **27.11.2024**
(21) Application number: 23159330.2
(22) Date of filing: 01.03.2023
(51) Int. Cl.: B60K 1/00, B60K 5/04, B60K 17/06, B60K 5/12

(54) **SUPPORT STRUCTURE FOR ELECTRIC COMPONENT**
TRÄGERSTRUKTUR FÜR ELEKTRISCHE KOMPONENTE
STRUCTURE DE SUPPORT POUR COMPOSANT ÉLECTRIQUE

(30) Priority: 31.03.2022 JP 2022059895
(43) Date of publication of application: 04.10.2023
(73) Proprietor: Suzuki Motor Corporation, Hamamatsu-shi, Shizuoka 432-8611 (JP)
(72) Inventor: AKASAKA, Fumiya, Hamamatsu-shi 432-8611 (JP); KISO, Tatsuya, Hamamatsu-shi 432-8611 (JP); KATO, Hidetoshi, Hamamatsu-shi 432-8611 (JP)
(74) Representative: Plasseraud IP

(56) References cited:
- EP-A1- 3 034 345
- EP-A1- 3 447 277
- EP-A1- 3 466 733
- EP-A1- 3 782 836
- JP-A- 2013 193 634
- US-A1- 2020 361 298

## Description

### [Technical Field]

The present invention relates to a support structure for an electric component, and in particular to a vehicle comprising the support structure.

### [Background Art]

Conventionally, a hybrid vehicle power plant has been known in which an inverter (electric component) is installed directly above a transaxle casing and the inverter and an internal combustion engine are connected by a stay to enhance stiffness in coupling between the internal combustion engine and the transaxle and curb deformation such as bending and twisting between the internal combustion engine and the transaxle (see WO2012/114491). An example of a drive unit is described in Patent Literature 2. An example of an in-vehicle structure of electrical equipment is described in Patent Literature 3.

### [Citation List]

### [Patent Literature]

[Patent Literature 1] WO2012/114491
[Patent Literature 2] US2020/361298
[Patent Literature 3] EP3782836

### [Summary of Invention]

### [Technical Problem]

However, since the conventional hybrid vehicle power plant does not have a configuration that curbs vibration of the inverter disposed directly above the transaxle casing, there is room for improvement in curbing vibration of the inverter.

The present invention has been made by focusing attention on the above circumstances, and aims to provide a support structure for an electric component that can enhance stiffness in support of the electric component installed directly above a transmission case and can curb vibration of the electric component.

### [Solution to Problem]

The present invention is a vehicle as defined in claim 1.

### [Advantageous Effect of Invention]

As described above, according to the present invention, it is possible to enhance stiffness in support of the electric component installed directly above the transmission case and curb vibration of the electric component.

### [Brief Description of Drawings]

[Figure 1] Figure 1 is a perspective view of an internal combustion engine and a transmission including a support structure for an electric component according to an example of the present invention.
[Figure 2] Figure 2 is a front view of the internal combustion engine and the transmission including the support structure for the electric component according to the example.
[Figure 3] Figure 3 is a left side view of the internal combustion engine and the transmission including the support structure for the electric component according to the example.
[Figure 4] Figure 4 is a top view of the internal combustion engine and the transmission including the support structure for the electric component according to the example.
[Figure 5] Figure 5 is a top view of the transmission including the support structure for the electric component according to the example, and illustrates a state where an upper bracket, an inverter, and a lower bracket are removed from the transmission.
[Figure 6] Figure 6 is a top view of the transmission including the support structure for the electric component according to the example, and illustrates a state where the upper bracket and the inverter are removed.
[Figure 7] Figure 7 is a diagram illustrating the support structure for the electric component according to the example of the present invention, and is an enlarged perspective view of a connection part of the upper bracket and a middle bracket.

### [Description of Embodiment]

A support structure for an electric component according to an embodiment of the present invention is a support structure for an electric component that is mounted on a vehicle including an internal combustion engine and a transmission connected to the internal combustion engine to be arranged next to the internal combustion engine in a vehicle width direction, and that is installed directly above a transmission case of the transmission such that a longer direction of the electric component is oriented in a vehicle front-rear direction and a shorter direction of the electric component is oriented in the vehicle width direction, in which: the electric component and the internal combustion engine are installed next to each other in the vehicle width direction; the support structure for the electric component comprises a support member connected to an upper wall of the electric component and the internal combustion engine; and the electric component is connected to the internal combustion engine via the support member.

With this configuration, the support structure for the electric component according to the embodiment of the present invention can enhance stiffness in support of the electric component installed directly above the transmission case, and can curb vibration of the electric component.

### [Embodiment]

Hereinafter, a support structure for an electric component according to an example of the present invention will be described with reference to the drawings.

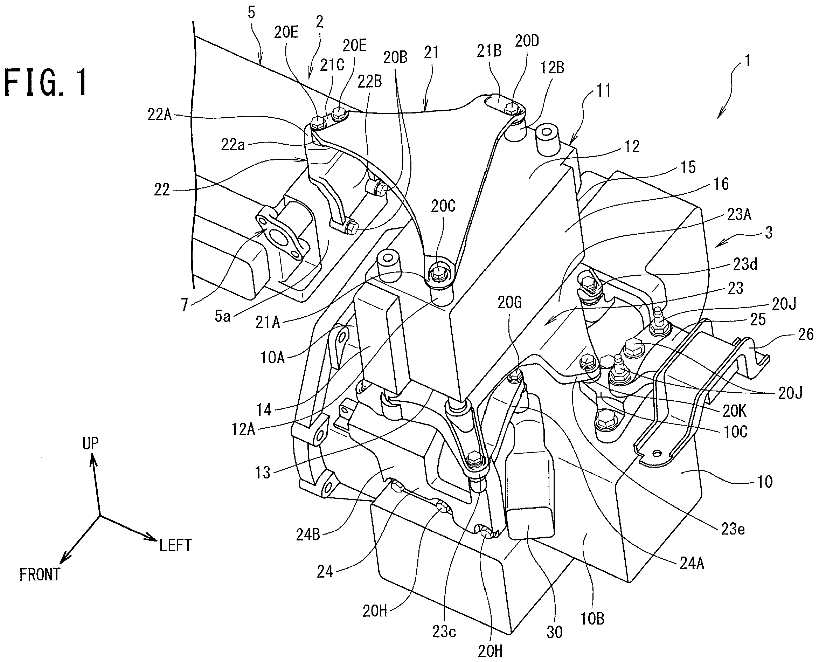

Figures 1 to 7 are diagrams illustrating the support structure for the electric component according to the example of the present invention. In Figures 1 to 7, upper and lower, front and rear, and left and right directions are based on an internal combustion engine and a transmission installed in a vehicle, and a front-rear direction of the vehicle is referred to as the front-rear direction, a left-right direction of the vehicle (width direction of vehicle) is referred to as the left-right direction, and an up-down direction of the vehicle (height direction of vehicle) is referred to as the up-down direction.

First, a configuration will be described.

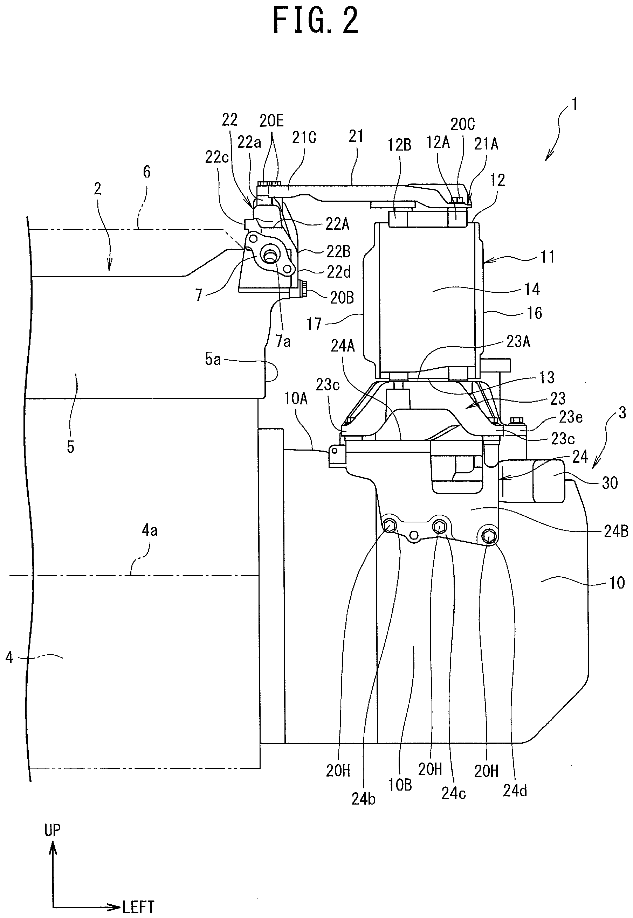

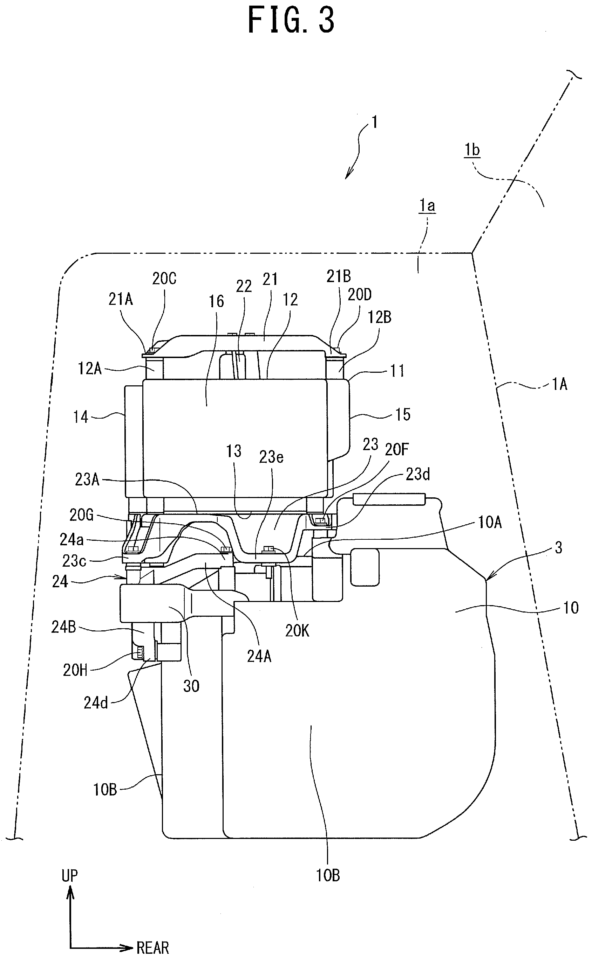

In Figures 1 and 2, an engine 2 as an internal combustion engine and a transmission 3 are installed in an engine compartment 1a of a vehicle 1 (see Figure 3). As illustrated in Figure 3, the vehicle 1 includes a dash panel 1A, the engine compartment 1a is formed in front of the dash panel 1A, and a vehicle interior 1b in which occupants including a driver ride is formed behind the dash panel 1A.

As illustrated in Figure 2, the engine 2 includes a cylinder block 4, a cylinder head 5 attached to an upper part of the cylinder block 4, a cylinder head cover 6 attached to an upper part of the cylinder head 5, and an oil pan (not illustrated) attached to a lower part of the cylinder block 4.

A crankshaft 4a is provided in the cylinder block 4, and the crankshaft 4a extends in the width direction of the vehicle (hereinafter also referred to as a vehicle width direction). The engine 2 of the present example is a transverse engine.

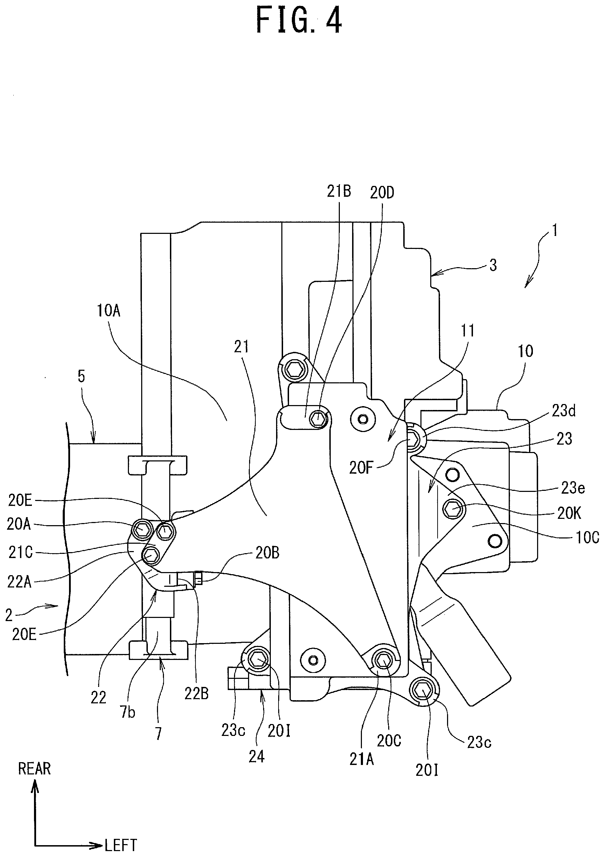

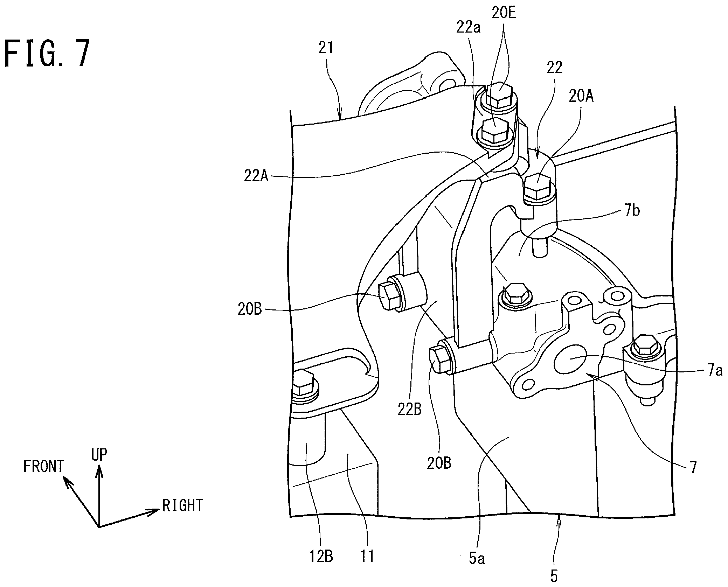

As illustrated in Figures 1 and 4, EGR piping 7 is provided in the cylinder head 5. The EGR piping 7 is provided in an upper part of the cylinder head 5 to extend in the front-rear direction of the vehicle 1, and includes therein an EGR passage 7a that allows passage of an EGR gas (see Figure 7).

An exhaust component (not illustrated) is installed on the front side of the engine 2, and the EGR gas flows into a front end part of the EGR passage 7a from the exhaust component. An intake component (not illustrated) is installed on the rear side of the engine 2, and the EGR gas discharged from a rear end part of the EGR passage 7a is discharged into the intake component.

A transmission case 10 is connected to the cylinder block 4 of the engine 2, and changes the speed of and outputs a drive force (rotation) transmitted from the crankshaft 4a.

The engine 2 and the transmission 3 are installed next to each other in the vehicle width direction, and the transmission 3 is installed in a part lower than the cylinder head 5. In other words, the engine 2 and the transmission 3 overlap in the front-rear direction.

The transmission 3 includes the transmission case 10, and a transmission mechanism, a differential device, and the like including components such as transmission gears (not illustrated) are installed in the transmission case 10.

As illustrated in Figures 1 and 4, an inverter 11 as the electric component is installed directly above the transmission case 10. The inverter 11 converts DC power supplied from a battery (not illustrated) into three-phase AC power and supplies the three-phase AC power to a motor generator, and converts three-phase AC power generated by the motor generator into DC power and charges a battery with the DC power.

As illustrated in Figure 4, the inverter 11 is installed directly above the transmission case 10 such that its longer direction is oriented in the front-rear direction of the vehicle 1 and its shorter direction is oriented in the vehicle width direction.

As illustrated in Figure 2, the inverter 11 has an upper wall 12, a lower wall 13, a front wall 14, a rear wall 15 (see Figure 1), a left wall 16, and a right wall 17.

As illustrated in Figure 1, an upper bracket 21 is connected to the upper wall 12 of the inverter 11. The upper bracket 21 is connected to the cylinder head 5 via a middle bracket 22.

In other words, the inverter 11 is connected to the cylinder head 5 via the upper bracket 21. The upper bracket 21 of the present example forms a support member.

The middle bracket 22 has a horizontal wall part 22A and a vertical wall part 22B. As illustrated in Figures 4 and 7, the horizontal wall part 22A is fastened to the EGR piping 7 in the up-down direction with a bolt 20A. Specifically, the horizontal wall part 22A is connected to a central part in the front-rear direction of an upper wall 7b of the EGR piping 7.

The vertical wall part 22B extends downward from a left end part in the vehicle width direction of the horizontal wall part 22A, and is fastened to a left side wall 5a of the cylinder head 5 in the horizontal direction with a bolt 20B (see Figures 1 and 2). The left side wall 5a of the cylinder head 5 faces the transmission 3 in the vehicle width direction.

In the present example, the upper wall 7b of the EGR piping 7 forms an upper wall of an internal combustion engine, and the left side wall 5a of the cylinder head 5 forms a side wall of the internal combustion engine.

As illustrated in Figure 4, when the transmission 3 is viewed from above, the upper bracket 21 is formed in a triangular shape and the inverter 11 is formed in a rectangular shape.

Fastening parts 21A, 21B, and 21C are provided in the three vertices of the triangular shape of the upper bracket 21, and the fastening parts 21A, 21B, and 21C are formed of bolt holes through which bolts 20C, 20D, and 20E are inserted, respectively.

The fastening part 21A forms a first fastening part of the present invention, the fastening part 21B forms a second fastening part of the present invention, and the fastening part 21C forms a third fastening part of the present invention.

As illustrated in Figure 1, fastened parts 12A and 12B are provided in a diagonally opposite front end part and rear end part of the rectangular upper wall 12 of the inverter 11.

Specifically, the fastened part 12A is provided in a left end part of the front end part of the upper wall 12, and the fastened part 12B is provided in a right end part of the rear end part of the upper wall 12 located diagonally opposite to the fastened part 12A.

The fastening part 21A of the upper bracket 21 is fastened to the fastened part 12A of the upper wall 12 of the inverter 11 with a bolt 20C, and the fastening part 21B of the upper bracket 21 is fastened to the fastened part 12B of the upper wall 12 of the inverter 11 with a bolt 20D.

As a result, the upper bracket 21 is fastened to the front end part and the rear end part of the upper wall 12 of the inverter 11 which are separated in the front-rear direction.

As illustrated in Figures 1 and 2, a fastened part 22a is provided in the horizontal wall part 22A of the middle bracket 22, and the fastening part 21C of the upper bracket 21 is fastened to the fastened part 22a of the horizontal wall part 22A of the middle bracket 22 in the up-down direction with a bolt 20E.

As illustrated in Figure 2, the fastened part 22a is provided between a right end part 22c (right end part 22c of horizontal wall part 22A) of the middle bracket 22 and a left end part 22d (left end part 22d of vertical wall part 22B) of the middle bracket 22 in the vehicle width direction.

In the present example, the fastened part 12A forms a first fastened part, the fastened part 12B forms a second fastened part, and the fastened part 22a forms a third fastened part.

The right end part 22c of the middle bracket 22 forms one end part in the vehicle width direction of a first bracket, and the left end part 22d of the middle bracket 22 forms the other end part in the vehicle width direction of the first bracket.

The bolt 20C forms a first fastener, the bolt 20D forms a second fastener, and the bolt 20E forms a third fastener.

As illustrated in Figure 1, a lower bracket 23 is connected to the lower wall 13 of the inverter 11, and the inverter 11 is connected to an upper wall 10A of the transmission case 10 by the lower bracket 23.

The middle bracket 22 of the present example forms the first bracket, and the lower bracket 23 forms a second bracket.

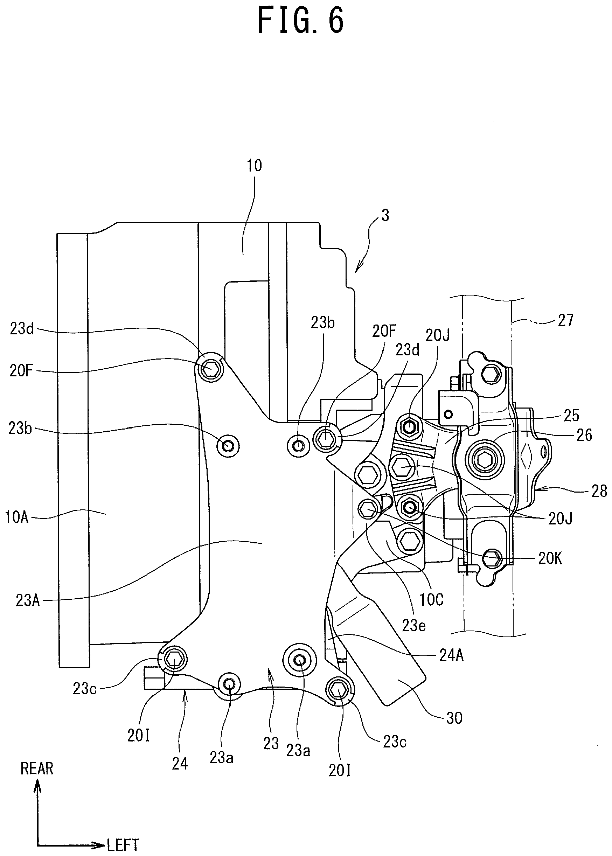

As illustrated in Figure 6, a flat-plate-shaped placement part 23A on which the inverter 11 is placed is provided in the lower bracket 23, and a pair of front fastened parts 23a and a pair of rear fastened parts 23b are provided in the placement part 23A.

The front fastened part 23a is provided in a front end part of the placement part 23A, and the rear fastened part 23b is provided in a rear end part of the placement part 23A.

A front end part of the lower wall 13 of the inverter 11 is fastened to the front fastened parts 23a with bolts (not illustrated), and a rear end part of the lower wall 13 of the inverter 11 is fastened to the rear fastened parts 23b with bolts (not illustrated).

A pair of front fastening parts 23c, a pair of rear fastening parts 23d, and a left fastening part 23e are provided in the lower bracket 23.

The front fastening part 23c is provided in a front end part of the placement part 23A and protrudes downward from the placement part 23A (see Figure 1).

The rear fastening part 23d is provided in a rear end part of the placement part 23A and protrudes downward from the placement part 23A (see Figure 3). The left fastening part 23e extends leftward and downward from a left end part of the placement part 23A to be located leftward of the left wall 16 of the inverter 11 (see Figures 1 and 3).

As illustrated in Figure 4, the left fastening part 23e, the inverter 11, and the engine 2 are installed next to one another in the vehicle width direction in the order of the left fastening part 23e, the inverter 11, and the engine 2. The left fastening part 23e of the present example forms a fastening part on one side.

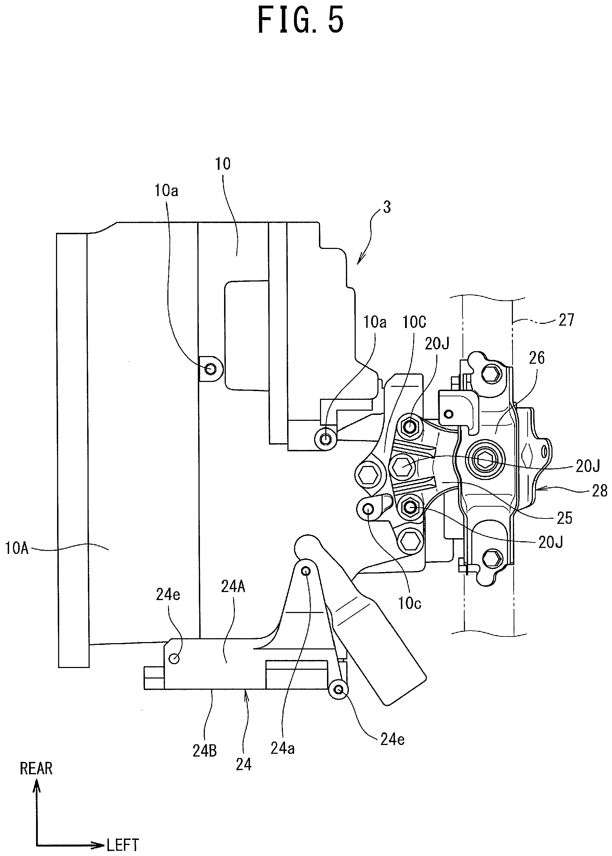

As illustrated in Figure 5, a pair of fastened parts 10a are provided in the upper wall 10A of the transmission case 10, and the rear fastening parts 23d of the lower bracket 23 are fastened to the fastened parts 10a in the up-down direction with bolts 20F (see Figure 6).

As illustrated in Figures 1 and 3, a middle bracket 24 is connected to the transmission case 10, and as illustrated in Figure 3, the middle bracket 24 includes a horizontal wall part 24A and a vertical wall part 24B. The middle bracket 24 of the present example forms a third bracket.

As illustrated in Figure 5, an upper fastening part 24a is provided in the horizontal wall part 24A, and the upper fastening part 24a is fastened to the upper wall 10A of the transmission case 10 in the up-down direction with a bolt 20G (see Figure 3).

As illustrated in Figure 3, the vertical wall part 24B extends downward along a front wall 10B of the transmission case 10 from a front end part of the horizontal wall part 24A. That is, the vertical wall part 24B extends in the up-down direction along the front wall 10B of the transmission case 10. The front wall 10B of the present example forms a side wall of the transmission case.

As illustrated in Figure 2, lower fastening parts 24b, 24c, and 24d (see Figure 3) are provided in the vertical wall part 24B, and the lower fastening parts 24b, 24c, and 24d are connected to the front wall 10B of the transmission case 10 in the horizontal direction with bolts 20H.

As illustrated in Figure 5, a pair of fastening parts 24e are provided in the horizontal wall part 24A of the middle bracket 24, and the front fastening part 23c of the placement part 23A is fastened to the pair of fastening parts 24e in the up-down direction with bolts 20I (see Figure 6).

As illustrated in Figure 5, a mount attachment part 10C is provided in a left end part of the upper wall 10A of the transmission case 10.

One end part of a mount bracket 25 is fastened to the mount attachment part 10C with bolts 20J.

The other end part of the mount bracket 25 is elastically supported to a left side member 27 by an elastic body unit 26. The mount bracket 25 and the elastic body unit 26 form a mount device 28. The left side member 27 of the present example forms a vehicle body.

With this configuration, the transmission 3 is elastically supported to the left side member 27 via the mount device 28. On the other hand, the engine 2 is elastically supported to a right side member (not illustrated) by a mount device (not illustrated).

As illustrated in Figure 5, a fastening part 10c is provided in the mount attachment part 10C, and the lower fastening part 23e of the lower bracket 23 is fastened to the fastening part 10c in the up-down direction with a bolt 20K (see Figure 6).

As described above, the lower bracket 23 of the present example is connected to the upper wall 10A of the transmission case 10, the middle bracket 24, and the mount attachment part 10C, and the inverter 11 is connected to the upper wall 10A of the transmission case 10, the middle bracket 24, and the mount attachment part 10C via the lower bracket 23.

As illustrated in Figure 3, a component 30 forming a part of the transmission 3 is attached to the upper wall 10A of the transmission case 10, and the horizontal wall part 24A of the middle bracket 24 is installed in a part higher than the component 30.

In other words, the component 30 having a certain height is installed in the upper wall 10A of the transmission case 10 of the present example. For this reason, when the front side of the lower bracket 23 interferes with the component 30 and cannot connect directly with the transmission case 10, the lower bracket 23 can be connected to the middle bracket 24 to connect the inverter 11 to the transmission case 10 via the lower bracket 23 and the middle bracket 24.

Note that while functions and the like of the component 30 are not described in detail, any component may be used as long as the component is included as a part of the transmission 3.

Next, effects of the support structure for the inverter 11 of the present example will be described.

According to the support structure for the inverter 11 of the present example, the inverter 11 is installed directly above the transmission case 10 such that its longer direction is oriented in the front-rear direction of the vehicle 1 and its shorter direction is oriented in the vehicle width direction, and is arranged next to the engine 2 in the vehicle width direction.

Additionally, the support structure for the inverter 11 has the upper bracket 21 connected to the upper wall 12 of the inverter 11 and the cylinder head 5, and the inverter 11 is connected to the cylinder head 5 via the upper bracket 21.

With this configuration, the upper wall 12 of the inverter 11 can be reinforced by the upper bracket 21 and also be supported by the upper bracket 21, so that vibration of the upper wall 12 of the inverter 11 can be curbed.

Additionally, since the inverter 11 is installed directly above the transmission case 10 such that its longer direction is oriented in the front-rear direction of the vehicle 1 and its shorter direction is oriented in the vehicle width direction, vibration in the vehicle width direction is weaker than vibration in the front-rear direction.

According to the support structure for the inverter 11 of the present example, by installing the inverter 11 and the engine 2 next to each other in the vehicle width direction and connecting the inverter 11 and the cylinder head 5 by the upper bracket 21, it is possible to curb vibration of the inverter 11 in the vehicle width direction.

Moreover, by connecting the inverter 11 and the cylinder head 5 by the upper bracket 21, it is possible to connect a vibration system including the engine 2 and a vibration system including the transmission 3 by the upper bracket 21, and enhance stiffness in support of the inverter 11 with respect to the cylinder head 5 to combine the vibration systems. For this reason, it is possible to curb vibration of the inverter 11 in the front-rear direction and the vehicle width direction.

As described above, the support structure for the inverter 11 of the present example can enhance stiffness in support of the inverter 11 installed directly above the transmission case 10 and can curb vibration of the inverter 11.

Additionally, the support structure for the inverter 11 of the present example has the middle bracket 22, and the middle bracket 22 is connected to the upper wall 7b of the EGR piping 7 and the left side wall 5a of the cylinder head 5 facing the transmission 3 in the vehicle width direction.

The upper bracket 21 is connected to the middle bracket 22, and the inverter 11 is connected to the cylinder head 5 via the upper bracket 21 and the middle bracket 22.

With this configuration, it is possible to connect the middle bracket 22 to two surfaces of the upper wall 7b of the EGR piping 7 and the left side wall 5a of the cylinder head 5 orthogonal to the upper wall 7b of the EGR piping 7, to increase the attachment strength of the middle bracket 22 to the cylinder head 5 and enhance stiffness of the middle bracket 22.

For this reason, by connecting the upper bracket 21 to the middle bracket 22 having high stiffness, it is possible to enhance stiffness in support of the inverter 11 with respect to the cylinder head 5 even more, and curb vibration of the inverter 11 more effectively.

Moreover, while the shape of the upper bracket 21 may become complex when the upper bracket 21 is directly connected to the EGR piping 7, by connecting the upper bracket 21 to the EGR piping 7 and the cylinder head 5 via the middle bracket 22, it is possible to simplify the shape of the upper bracket 21.

Additionally, according to the support structure for the inverter 11 of the present example, when the transmission 3 is viewed from above, the upper bracket 21 is formed in a triangular shape and the inverter 11 is formed in a rectangular shape.

The fastening parts 21A, 21B, and 21C are provided at the three vertices of the triangular shape of the upper bracket 21, and the fastened parts 12A and 12B are provided in the front end part and the rear end part on a diagonal line of the rectangular shape of the upper wall 12 of the inverter 11. Moreover, the fastened part 22a is provided in the middle bracket 22.

Additionally, the fastening part 21A is fastened to the fastened part 12A with the bolt 20C, and the fastening part 21B is fastened to the fastened part 12B with the bolt 20D. Moreover, the fastening part 21C is fastened to the fastened part 22a with the bolt 20E.

Additionally, the fastened part 22a is provided between the right end part 22c and the left end part 22d of the middle bracket 22 in the vehicle width direction.

As described above, by fastening the fastening part 21A in the front end part and the fastening part 21B in the rear end part of the upper bracket 21 to the fastened parts 12A and 12B provided in the front end part and the rear end part on the diagonal line of the inverter 11 with the bolts 20C and 20D, it is possible to support the front and rear end parts of the upper wall 12 of the inverter 11 by the upper bracket 21.

For this reason, it is possible to enhance stiffness in support of the inverter 11 with respect to the upper bracket 21 even more.

Additionally, since the fastened part 22a of the upper bracket 21 can be connected to the middle bracket 22 having high stiffness, it is possible to enhance stiffness in support of the upper bracket 21 with respect to the middle bracket 22 even more. For this reason, stiffness in support of the inverter 11 with respect to the cylinder head 5 can be enhanced even more.

Additionally, since the fastened part 22a is provided between the right end part 22c and the left end part 22d of the middle bracket 22 in the vehicle width direction, when vibration of the upper wall 12 of the inverter 11 is transmitted to the middle bracket 22 through the upper bracket 21, the vibration can be distributed from the middle bracket 22 to the upper wall 7b of the EGR piping 7 and the left side wall 5a of the cylinder head 5.

As a result, stiffness in support of the inverter 11 installed directly above the transmission case 10 can be enhanced even more, and vibration of the inverter 11 can be curbed more effectively.

Additionally, according to the support structure for the inverter 11 of the present example, the cylinder head 5 has the EGR piping 7 through which the EGR gas flows, and the EGR piping 7 is provided in an upper part of the cylinder head 5 to extend in the front-rear direction.

Moreover, the middle bracket 22 is connected to the central part in the front-rear direction of the upper wall 7b of the EGR piping 7.

Here, since the EGR piping 7 includes the EGR passage 7a, the EGR piping 7 is thin. For this reason, when the upper bracket 21 is connected to the EGR piping 7 alone, stress tends to concentrate in the EGR piping 7.

According to the support structure for the inverter 11 of the present example, by connecting the middle bracket 22 to the upper wall 7b of the EGR piping 7 and the left side wall 5a of the cylinder head 5 having a higher stiffness than the EGR piping 7, stress transmitted from the inverter 11 to the middle bracket 22 via the upper bracket 21 can be distributed to the upper wall 7b of the EGR piping 7 and the left side wall 5a of the cylinder head 5 by the middle bracket 22.

For this reason, it is possible to enhance stiffness in support of the inverter 11 with respect to the cylinder head 5 while protecting the EGR piping 7.

Additionally, since the middle bracket 22 is connected to the central part in the front-rear direction of the upper wall 7b of the EGR piping 7, it is possible to prevent concentration of stress to the front end part or the rear end part of the EGR piping 7 and disperse the stress applied on the EGR piping 7 from the central part in the front-rear direction of the EGR piping 7 to the entire EGR piping 7 to protect the EGR piping 7 more effectively.

Additionally, the support structure for the inverter 11 of the present example has the lower bracket 23 connected to the upper wall 10A of the transmission case 10, and the inverter 11 is fastened to the front fastened part 23a provided in the front end part of the lower bracket 23 and the rear fastened part 23b provided in the rear end part of the lower bracket 23.

The lower bracket 23 is fastened to the transmission case 10 via the front fastening part 23c provided in the front end part of the lower bracket 23, the rear fastening part 23d provided in the rear end part of the lower bracket 23, and the left fastening part 23e provided in the lower bracket 23 to be located on the left side of the inverter 11, and the left fastening part 23e, the inverter 11, and the engine 2 are installed next to one another in the vehicle width direction in the order of the left fastening part 23e, the inverter 11, and the engine 2.

With this configuration, it is possible to connect the lower bracket 23 to which the inverter 11 is connected with the transmission case 10 in a wider range than the area of the lower wall 13 of the inverter 11, and enhance stiffness in support of the inverter 11 with respect to the transmission case 10 even more.

Additionally, since the lower bracket 23 is connected with the transmission case 10 in a longer range than the length in the vehicle width direction of the lower wall 13 of the inverter 11, it is possible to curb vibration of the inverter 11 in the vehicle width direction more effectively.

Additionally, according to the support structure for the inverter 11 of the present example, the transmission case 10 has the mount attachment part 10C.

The mount attachment part 10C is connected to the mount bracket 25 that connects the transmission case 10 to the left side member 27, and the left fastening part 23e is fastened to the mount attachment part 10C.

Since the mount bracket 25 is connected to the mount attachment part 10C with the bolts 20J, the mount attachment part 10C has high stiffness. Hence, by providing the left fastening part 23e in the mount attachment part 10C having high stiffness and connecting the lower bracket 23 to the left fastening part 23e, it is possible to increase the attachment strength of the lower bracket 23. For this reason, it is possible to enhance stiffness in support of the inverter 11 with respect to the transmission case 10 even more.

Additionally, since the left fastening part 23e farthest away from the engine 2 in the vehicle width direction is installed in the mount attachment part 10C having high stiffness and the lower bracket 23 is connected to the left fastening part 23e, it is possible to increase the attachment strength of the lower bracket 23 with respect to the transmission case 10 in the vehicle width direction. For this reason, it is possible to curb vibration of the inverter 11 in the vehicle width direction more effectively.

Additionally, the support structure for the inverter 11 of the present example has the middle bracket 24 connected to the transmission case 10.

The front fastening part 23c is fastened to the middle bracket 24, and the inverter 11 is connected to the transmission case 10 via the lower bracket 23 and the middle bracket 24.

As a result, even when the distance between the transmission case 10 and the inverter 11 is long, the inverter 11 can be connected to the transmission case 10 via the lower bracket 23 and the middle bracket 24.

For this reason, it is possible to enhance stiffness in coupling between the inverter 11 and the transmission case 10 by the lower bracket 23 and the middle bracket 24, and prevent reduction of stiffness in support of the inverter 11 with respect to the transmission case 10. As a result, it is possible to curb vibration of the inverter 11 more effectively.

Additionally, even when the component 30 is installed on the upper wall 10A of the transmission case 10, the lower bracket 23 and the middle bracket 24 can prevent interference of the inverter 11 with the component 30 and also enable installation of the inverter 11 directly above the transmission case 10 to improve the degree of freedom of installation of the inverter 11.

While an example of the present invention has been disclosed, it is clear that a person skilled in the art can make modifications without departing from the scope of the present invention as defined by the appended claims.

### [Reference Signs List]

1...vehicle, 2...engine (internal combustion engine), 3...transmission, 5a...left side wall (side wall of internal combustion engine), 7...EGR piping, 7b...upper wall (upper wall of internal combustion engine), 10C...mount attachment part, 11...inverter (electric component), 12A...fastened part (first fastened part), 12B...fastened part (second fastened part), 20C...bolt (first fastener), 20D...bolt (second fastener), 20E...bolt (third fastener), 21...upper bracket (support member), 21A...fastening part (first fastening part), 21B...fastening part (second fastening part), 21C...fastening part (third fastening part), 22...middle bracket (first bracket), 22a...fastened part (third fastened part), 22c...right end part (one end part in vehicle width direction of first bracket), 22d...left end part (other end part in vehicle width direction of first bracket), 23...lower bracket (second bracket), 23a...front fastened part, 23b...rear fastened part, 23c...front fastening part, 23d...rear fastening part, 23e...left fastening part (fastening part on one side), 24...middle bracket (third bracket), 25...mount bracket, 27...left side member (vehicle body).

## Claims

1. A vehicle (1) comprising:
an internal combustion engine (2);
a transmission (3) having a transmission case (10) and arranged next to the internal combustion engine (2) in a vehicle width direction;
an electric component (11) supported directly above the transmission case (10) such that a longer direction of the electric component (11) is oriented in a vehicle front-rear direction and a shorter direction of the electric component (11) is oriented in the vehicle width direction; and
a support structure comprising a support member (21) connected to an upper wall (12) of the electric component (11) and the internal combustion engine (2) to connect the electric component (11) to the internal combustion engine (2),
the electric component (11) and the internal combustion engine (2) being installed next to each other in the vehicle width direction;
wherein
the support structure comprises a first bracket (22) that is connected to an upper wall (7b) of the internal combustion engine (2) and a side wall (5a) of the internal combustion engine (2) facing the transmission (3) in the vehicle width direction, wherein
the support member (21) is connected to the internal combustion engine (2) at the first bracket (22), and
the electric component (11) is connected to the internal combustion engine (2) via the support member (21) and the first bracket (22).

2. The vehicle (1) as claimed in claim 1, wherein
when the transmission (3) is viewed from above, the support member (21) is formed in a triangular shape and the electric component (11) is formed in a rectangular shape;
a first fastening part (21A), a second fastening part (21B), and a third fastening part (21C) are provided in three vertices of the triangular shape of the support member (21);
a first fastened part (12A) and a second fastened part (12B) are respectively provided in a front end part and a rear end part on a diagonal line of the rectangular shape of the electric component (11);
a third fastened part (22a) is provided in the first bracket (22);
the first fastening part (21A) is fastened to the first fastened part (12A) with a first fastener (20C);
the second fastening part (21B) is fastened to the second fastened part (12B) with a second fastener (20D);
the third fastening part (21C) is fastened to the third fastened part (22a) with a third fastener (20E); and
the third fastened part (22a) is provided between one end part in the vehicle width direction (22c) and another end part in the vehicle width direction (22d) of the first bracket (22) in the vehicle width direction.

3. The vehicle (1) as claimed in claim 1 or 2, wherein
the internal combustion engine (2) has EGR piping (7) through which an EGR gas flows;
the EGR piping (7) is provided in an upper part of the internal combustion engine (2) to extend in the vehicle front-rear direction;
an upper wall (7b) of the EGR piping (7) forms the upper wall (7b) of the internal combustion engine (2); and
the first bracket (22) is connected to a central part in the vehicle front-rear direction of the upper wall (7b) of the EGR piping (7).

4. The vehicle (1) as claimed in any one of claims 1 to 3, further comprising a second bracket (23) that is connected to an upper wall (10A) of the transmission case (10), wherein:
the electric component (11) is fastened to a front fastened part (23a) provided in a front end part of the second bracket (23) and a rear fastened part (23b) provided in a rear end part of the second bracket (23);
the second bracket (23) is fastened to the transmission case (10) via a front fastening part (23c) provided in a front end part of the second bracket (23), a rear fastening part (23d) provided in a rear end part of the second bracket (23), and a fastening part on one side (23e) provided in the second bracket (23) to be located on one side in the vehicle width direction of the electric component (11); and
the fastening part on one side (23e), the electric component (11), and the internal combustion engine (2) are installed next to one another in the vehicle width direction in the order of the fastening part on one side (23e), the electric component (11), and the internal combustion engine (2).

5. The vehicle (1) as claimed in claim 4, wherein
a mount attachment part (10C) is provided on the upper wall (10A) of the transmission case (10);
the mount attachment part (10C) is connected to a mount bracket (25) connecting the transmission case (10) to a vehicle body (27); and
the fastening part on one side (23e) is fastened to the mount attachment part (10C).

6. The vehicle (1) as claimed in claim 4 or 5, further comprising a third bracket (24) that is connected to the transmission case (10), wherein
the front fastening part (23c) is fastened to the third bracket (24), and the electric component (11) is connected to the transmission case (10) via the second bracket (23) and the third bracket (24).

## Patentansprüche

1. Fahrzeug (1), umfassend:
einen Verbrennungsmotor (2);
ein Getriebe (3), das ein Getriebegehäuse (10) aufweist und in einer Fahrzeugbreitenrichtung neben dem Verbrennungsmotor (2) angeordnet ist;
eine elektrische Komponente (11), die direkt über dem Getriebegehäuse (10) so gelagert ist, dass eine längere Richtung der elektrischen Komponente (11) in einer Fahrzeug-Front-Heck-Richtung ausgerichtet ist und eine kürzere Richtung der elektrischen Komponente (11) in der Fahrzeugbreitenrichtung ausgerichtet ist; und
eine Stützstruktur, die ein Stützelement (21) umfasst, das mit einer oberen Wand (12) der elektrischen Komponente (11) und dem Verbrennungsmotor (2) verbunden ist, um die elektrische Komponente (11) mit dem Verbrennungsmotor (2) zu verbinden,
wobei die elektrische Komponente (11) und der Verbrennungsmotor (2) in der Fahrzeugbreitenrichtung nebeneinander installiert sind,
wobei die Stützstruktur eine erste Halterung (22) umfasst, die mit einer oberen Wand (7b) des Verbrennungsmotors (2) und einer seitlichen Wand (5a) des Verbrennungsmotors (2), die dem Getriebe (3) in der Fahrzeugbreitenrichtung zugewandt ist, verbunden ist, wobei
das Stützelement (21) mit dem Verbrennungsmotor (2) an der ersten Halterung (22) verbunden ist, und
die elektrische Komponente (11) mit dem Verbrennungsmotor (2) über das Stützelement (21) und die erste Halterung (22) verbunden ist.

2. Fahrzeug (1) wie beansprucht nach Anspruch 1, wobei
wenn das Getriebe (3) von oben betrachtet wird, das Stützelement (21) in einer dreieckigen Form gebildet ist und die elektrische Komponente (11) in einer rechteckigen Form gebildet ist;
ein erstes befestigendes Teil (21A), ein zweites befestigendes Teil (21B), und ein drittes befestigendes Teil (21C) an drei Eckpunkten der dreieckigen Form des Stützelements (21) bereitgestellt sind;
ein erstes befestigtes Teil (12A) und ein zweites befestigtes Teil (12B) jeweils in einem vorderen Endteil und einem hinteren Endteil auf einer diagonalen Linie der rechteckigen Form der elektrischen Komponente (11) bereitgestellt sind;
ein drittes befestigtes Teil (22a) in der ersten Halterung (22) bereitgestellt ist;
das erste befestigende Teil (21A) an dem ersten befestigten Teil (12A) mit einem ersten Befestigungsmittel (20C) befestigt ist;
das zweite befestigende Teil (21B) an dem zweiten befestigten Teil (12B) mit einem zweiten Befestigungsmittel (20D) befestigt ist;
das dritte befestigende Teil (21C) an dem dritten befestigten Teil (22a) mit einem dritten Befestigungsmittel (20E) befestigt ist; und
das dritte befestigte Teil (22a) zwischen einem Endteil in der Fahrzeugbreitenrichtung (22c) und einem anderen Endteil in der Fahrzeugbreitenrichtung (22d) der ersten Halterung (22) in der Fahrzeugbreitenrichtung bereitgestellt ist.

3. Fahrzeug (1) wie beansprucht nach Anspruch 1 oder 2, wobei
der Verbrennungsmotor (2) eine AGR-Rohrleitung (7) aufweist, durch die ein AGR-Gas strömt;
die AGR-Rohrleitung (7) in einem oberen Teil des Verbrennungsmotors (2) bereitgestellt ist, um sich in der Fahrzeug-Front-Heck-Richtung zu erstrecken;
eine obere Wand (7b) der AGR-Rohrleitung (7) die obere Wand (7b) des Verbrennungsmotors (2) bildet; und
die erste Halterung (22) mit einem zentralen Teil in der Fahrzeug-Front-Heck-Richtung der oberen Wand (7b) der AGR-Rohrleitung (7) verbunden ist.

4. Fahrzeug (1) wie beansprucht nach einem der Ansprüche 1 bis 3, ferner umfassend eine zweite Halterung (23), die mit einer oberen Wand (10A) des Getriebegehäuses (10) verbunden ist, wobei:
die elektrische Komponente (11) an einem vorderen befestigten Teil (23a), das in einem vorderen Endteil der zweiten Halterung (23) bereitgestellt ist und einem hinteren befestigten Teil (23b), das in einem hinteren Endteil der zweiten Halterung (23) bereitgestellt ist, befestigt ist;
die zweite Halterung (23) an dem Getriebegehäuse (10) über ein vorderes befestigendes Teil (23c), das in einem vorderen Endteil der zweiten Halterung (23) bereitgestellt ist, einem hinteren befestigenden Teil (23d), das in einem hinteren Endteil der zweiten Halterung (23) bereitgestellt ist, und einem befestigenden Teil auf einer Seite (23e) befestigt ist, das in der zweiten Halterung (23) bereitgestellt ist, um auf einer Seite in der Fahrzeugbreitenrichtung der elektrischen Komponente (11) angeordnet zu sein; und
das befestigende Teil auf einer Seite (23e), die elektrische Komponente (11), und der Verbrennungsmotor (2) nebeneinander in der Fahrzeugbreitenrichtung in der Reihenfolge des befestigenden Teils auf einer Seite (23e), der elektrischen Komponente (11), und des Verbrennungsmotors (2) installiert sind.

5. Fahrzeug (1) wie beansprucht nach Anspruch 4, wobei
ein eingebautes Bindungsteil (10C) an der oberen Wand (10A) des Getriebegehäuses (10) bereitgestellt ist;
das eingebaute Bindungsteil (10C) mit einer eingebauten Halterung (25) verbunden ist, die das Getriebegehäuse (10) mit einem Fahrzeugkörper (27) verbindet; und
das befestigende Teil auf einer Seite (23e) an ein eingebautes Bindungsteil (10C) befestigt ist.

6. Fahrzeug (1) wie beansprucht nach Anspruch 4 oder 5, ferner umfassend eine dritte Halterung (24), die mit dem Getriebegehäuse (10) verbunden ist, wobei
das vordere befestigende Teil (23c) an der dritten Halterung (24) befestigt ist, und die elektrische Komponente (11) über die zweite Halterung (23) und die dritte Halterung (24) mit dem Getriebegehäuse (10) verbunden ist.

## Revendications

1. Véhicule (1) comprenant :
un moteur à combustion interne (2) ;
une transmission (3) ayant un boîtier de transmission (10) et agencée à côté du moteur à combustion interne (2) dans une direction de largeur de véhicule ;
un composant électrique (11) supporté directement au-dessus du boîtier de transmission (10) de sorte qu'une direction plus longue du composant électrique (11) soit orientée dans une direction avant/arrière de véhicule et une direction plus courte du composant électrique (11) soit orientée dans la direction de largeur de véhicule ; et
une structure de support comprenant un élément de support (21) raccordé à une paroi supérieure (12) du composant électrique (11) et au moteur à combustion interne (2) pour raccorder le composant électrique (11) au moteur à combustion interne (2),
le composant électrique (11) et le moteur à combustion interne (2) étant installés l'un à côté de l'autre dans la direction de largeur de véhicule ;
dans lequel la structure de support comprend un premier support (22) qui est raccordé à une paroi supérieure (7b) du moteur à combustion interne (2) et à une paroi latérale (5a) du moteur à combustion interne (2) faisant face à la transmission (3) dans la direction de largeur de véhicule, dans lequel
l'élément de support (21) est raccordé au moteur à combustion interne (2) au niveau du premier support (22), et
le composant électrique (11) est raccordé au moteur à combustion interne (2) par le biais de l'élément de support (21) et du premier support (22).

2. Véhicule (1) selon la revendication 1, dans lequel
lorsque la transmission (3) est vue depuis le dessus, l'élément de support (21) est formé sous une forme triangulaire et le composant électrique (11) est formé sous une forme rectangulaire ;
une première partie de fixation (21A), une deuxième partie de fixation (21B), et une troisième partie de fixation (21C) sont disposées dans trois sommets de la forme triangulaire de l'élément de support (21) ;
une première partie fixée (12A) et une deuxième partie fixée (12B) sont respectivement disposées dans une partie d'extrémité avant et une partie d'extrémité arrière sur une ligne diagonale de la forme rectangulaire du composant électrique (11) ;
une troisième partie fixée (22a) est disposée dans le premier support (22) ;
la première partie de fixation (21A) est fixée à la première partie fixée (12A) avec un premier élément de fixation (20C) ;
la deuxième partie de fixation (21B) est fixée à la deuxième partie fixée (12B) avec un deuxième élément de fixation (20D) ;
la troisième partie de fixation (21C) est fixée à la troisième partie fixée (22a) avec un troisième élément de fixation (20E) ; et
la troisième partie fixée (22a) est disposée entre une partie d'extrémité dans la direction de largeur de véhicule (22c) et une autre partie d'extrémité dans la direction de largeur de véhicule (22d) du premier support (22) dans la direction de largeur de véhicule.

3. Véhicule (1) selon la revendication 1 ou 2, dans lequel
le moteur à combustion interne (2) présente une tuyauterie RGE (7) à travers laquelle un gaz RGE circule ;
la tuyauterie RGE (7) est disposée dans une partie supérieure du moteur à combustion interne (2) pour s'étendre dans la direction avant/arrière de véhicule ;
une paroi supérieure (7b) de la tuyauterie RGE (7) forme la paroi supérieure (7b) du moteur à combustion interne (2) ; et
le premier support (22) est raccordé à une partie centrale dans la direction avant/arrière de véhicule de la paroi supérieure (7b) de la tuyauterie RGE (7).

4. Véhicule (1) selon l'une quelconque des revendications 1 à 3, comprenant en outre un deuxième support (23) qui est raccordé à une paroi supérieure (10A) du boîtier de transmission (10), dans lequel :
le composant électrique (11) est fixé à une partie fixée avant (23a) disposée dans une partie d'extrémité avant du deuxième support (23) et à une partie fixée arrière (23b) disposée dans une partie d'extrémité arrière du deuxième support (23) ;
le deuxième support (23) est fixé au boîtier de transmission (10) par le biais d'une partie de fixation avant (23c) disposée dans une partie d'extrémité avant du deuxième support (23), d'une partie de fixation arrière (23d) disposée dans une partie d'extrémité arrière du deuxième support (23), et d'une partie de fixation sur un côté (23e) disposée dans le deuxième support (23) pour être située sur un côté dans la direction de largeur de véhicule du composant électrique (11) ; et
la partie de fixation sur un côté (23e), le composant électrique (11), et le moteur à combustion interne (2) sont installés les uns à côté des autres dans la direction de largeur de véhicule dans l'ordre de la partie de fixation sur un côté (23e), du composant électrique (11), et du moteur à combustion interne (2).

5. Véhicule (1) selon la revendication 4, dans lequel
une partie d'attache de monture (10C) est disposée sur la paroi supérieure (10A) du boîtier de transmission (10) ;
la partie d'attache de monture (10C) est raccordée à un support de monture (25) raccordant le boîtier de transmission (10) à une carrosserie de véhicule (27) ; et
la partie de fixation sur un côté (23e) est fixée à la partie d'attache de monture (10C).

6. Véhicule (1) selon la revendication 4 ou 5, comprenant en outre un troisième support (24) qui est raccordé au boîtier de transmission (10), dans lequel
la partie de fixation avant (23c) est fixée au troisième support (24), et le composant électrique (11) est raccordé au boîtier de transmission (10) par le biais du deuxième support (23) et du troisième support (24).
